# EUROPÄISCHE PATENTANMELDUNG

(11) **EP 1 769 663 A1**
(43) Veröffentlichungstag der Anmeldung: **04.04.2007**
(21) Anmeldenummer: 06019520.3
(22) Anmeldetag: 19.09.2006
(51) Int. Cl.: A01D 34/416

(54) **Schneidvorsatz für Motorsensen und Freischneider**

(30) Priorität: 29.09.2005 DE 202005015396 U
(71) Anmelder: Parras, Siegfried, 46459 Rees (DE)
(72) Erfinder: Parras, Siegfried, 46459 Rees (DE)
(74) Vertreter: Schoenen, Norbert

(57) **Zusammenfassung**

Der Schneidvorsatz weist mindestens ein Schneidwerkzeug (3; 4) mit mindestens einem Gelenk auf. Er ist für Gestrüpp mit extremem Wildwuchs und dicken Pflanzenstängeln, kleinen Sträuchern und kleinen Bäumchen geeignet und trennt dieses Pflanzenmaterial gleichzeitig in nur einem Arbeitsschritt von den Wurzeln ab und zerhäckselt es zu Mulch, wobei der Schneidvorsatz sowohl robust als auch sehr effektiv, nämlich zeitsparend beim Arbeiten ist.

## Beschreibung

Die Erfindung betrifft einen Schneidvorsatz für Motorsensen und Freischneider.

Motorsensen und Freischneider sind Geräte zur Garten- und Landschaftspflege mit einer vertikalen Rotationsachse, an der ein so genannter Mähkopf oder Schneidvorsatz angebracht ist. Mit diesen Geräten lassen sich Gras, Unkraut unterschiedlicher Stärke, Schilf, Büsche und dünne Bäumchen entfernen, wobei je nach den zu entfernenden Pflanzen ein unterschiedlicher Schneidvorsatz verwendet wird. Für wenig widerstandsfähige Pflanzen wie Gras und schwache Unkräuter werden Schneidvorsätze mit Kunststofffäden, für stärkere Unkräuter Schneidmesser aus Kunststoff oder Stahl und für noch stärkere Pflanzen wie Schilf, Büsche und dünne Bäumchen Schneideblätter, Häckselmesser und Sägeblätter aus Hartmetall, insbesondere aus Stahl verwendet.

Zum Beseitigen von Gestrüpp mit extremem Wildwuchs und kleinen Sträuchern und Bäumchen sind Schneidvorsätze mit Kunststofffäden nicht geeignet, da diese bei den relativ dicken Stängeln zerreißen. Die üblichen Messer wie so genannte Dickichtmesser oder Häckselmesser, welche zwei oder drei Messerarme haben, welche sich sternförmig von der Drehachse nach außen erstrecken, sind zwar für die Entfernung von besonders dichtem Wildwuchs mit relativ starken Stängeln geeignet, erfordern aber einen großen Kraftaufwand, da die Häckselwirkung fehlt und das lange Schnittgut geschoben werden muss, wodurch die gemähte Fläche unordentlich aussieht. Da nicht gehäckseltes Mähgut sich schlecht zersetzt, muss es in den meisten Fällen abgefahren werden.

Werden andererseits die für dünne Baumstämmchen vorgesehenen Kreissägeblätter verwendet, so können die dünnen Baumstämmchen zwar entfernt werden, indem diese mittels des Sägeblattes abgesägt werden. Wenn dieses abgesägte Pflanzenmaterial dann aber zu Mulch zerhäckselt werden soll, ist ein weiterer Arbeitsschritt notwendig. Die Baumstämmchen müssen dann in einem Schredder zerkleinert bzw. abgefahren werden.

Der Erfindung liegt daher die Aufgabe zugrunde, einen Schneidvorsatz für Motorsensen und Freischneider zu entwickeln, der einerseits für Gestrüpp mit extremem Wildwuchs und dicken Pflanzenstängeln, kleinen Sträuchern und kleinen Bäumchen geeignet ist und dieses Pflanzenmaterial gleichzeitig in nur einem Arbeitsschritt von den Wurzeln abtrennt und zu Mulch zerhäckselt, wobei der Schneidvorsatz sowohl robust als auch sehr effektiv, nämlich zeitsparend beim Arbeiten ist.

Diese Aufgabe wird bei diesem Schneidvorsatz erfindungsgemäß dadurch gelöst, dass der Schneidvorsatz mindestens ein Schneidwerkzeug mit mindestens einem Gelenk, insbesondere mit vielen Gelenken in der Vertikalen wie in der Horizontalen, aufweist.

Damit wird der Vorteil gegenüber den herkömmlichen Dickichtmessern mit zwei oder drei sternförmig sich nach außen erstreckenden Messern erreicht, das Pflanzengut nicht nur abzuschneiden, sondern auch gleichzeitig zu zerhäckseln.

Im Gegensatz zu den genannten bekannten Messern kann das erfindungsgemäße Schneidwerkzeug zweitens auch bei beliebig starkem Unkraut, knorrigem Buschwerk und auch bei Baumstämmchen eingesetzt werden, ohne dass dabei der Motor blockiert. Falls nämlich das Schneidwerkzeug die Pflanze nicht sofort abtrennt, weicht das Werkzeug infolge seiner Gelenke der Pflanze aus, so dass der Motor sich weiter drehen kann und das Schneidwerkzeug in einem zweiten und dritten Schlag die Pflanze von der Wurzel abtrennt und bei weiteren Umdrehungen zu Mulch zerhäckselt.

Vorzugsweise ist das Schneidwerkzeug als Kette ausgebildet. Möglich wären aber auch andere langgestreckte Elemente mit im Betrieb vertikalen und horizontalen Gelenken. Besonders wichtig sind die vertikalen Gelenke.

Weiterhin wird vorgeschlagen, dass das Schneidwerkzeug aus Metall, insbesondere aus Stahl, besteht, um eine hohe Durchschlagskraft und eine lange Lebensdauer auch bei Dauereinsatz gegen extremen Wildwuchs zu gewährleisten.

In einer besonders vorteilhaften Ausgestaltung weist der Schneidvorsatz eine Platte mit einem Befestigungsanschluss an der Motorsense bzw. am Freischneider auf, wobei mindestens zwei Schneidwerkzeuge an der Platte, insbesondere in deren Randbereich, befestigt sind.

Der Schneidvorsatz besteht damit aus zwei Teilen, nämlich der Platte, die beispielsweise als eine oder mehrere Kreisscheiben ausgebildet sein kann, und den an der Platte außen befestigten Schneidwerkzeugen mit ihren Gelenken.

Dabei ist es von besonderem Vorteil, wenn die Schneidwerkzeuge auswechselbar an der Platte befestigt sind. Bei einem Verschleiß brauchen also nur die Schneidwerkzeuge, nicht aber die Platte ausgetauscht werden.

In der Praxis hat es sich als vorteilhaft erwiesen, wenn der Schneidvorsatz zwei gegenüberliegende Schneidwerkzeuge aufweist. Ebenso ist es aber auch möglich, dass drei, vier oder noch mehr Schneidwerkzeuge vorgesehen sind, die gleichmäßig über den Umfang der Platte angeordnet sind.

Im Folgenden werden zwei Ausführungsbeispiele der Erfindung anhand von Zeichnungen näher beschrieben. Es zeigen
- Figur 1: eine Draufsicht auf einen erfindungsgemäßen Schneidvorsatz nach einem ersten Ausführungsbeispiel in schematischer Darstellung,
- Figur 2: eine perspektivische vergrößerte Darstellung des zentralen Teils des Schneidvorsatzes nach Figur 1,
- Figur 3: der zentrale Teil entsprechend Figur 2, gesehen aber in Draufsicht,
- Figur 4: eine perspektivische Darstellung eines Schneidvorsatzes gemäß einem zweiten erfindungsgemäßen Ausführungsbeispiel, aber ohne Abdeckplatte und
- Figur 5: eine weitere perspektivische Darstellung des Schneidvorsatzes nach Figur 4, hier aber mit der Abdeckplatte.

In allen Zeichnungen haben gleiche Bezugszeichen die gleiche Bedeutung und werden daher gegebenenfalls nur einmal erläutert.

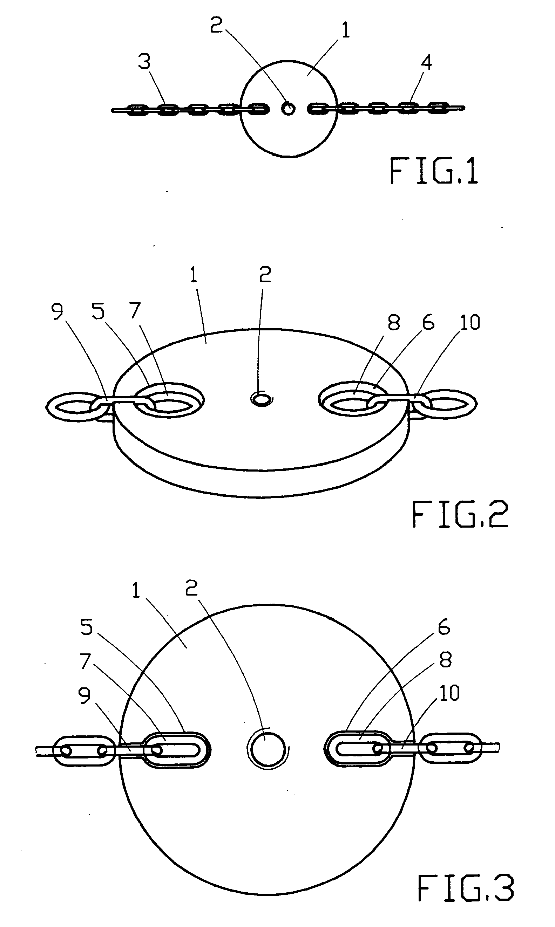

In dem ersten Ausführungsbeispiel nach den Figuren 1 bis 3 besteht der Schneidvorsatz aus einer kreisscheibenförmigen Platte 1 mit einer zentralen Gewindebohrung 2, die zum Anschrauben des Schneidvorsatzes an die Welle der Motorsense bzw. des Freischneiders dient. Am Randbereich der Platte 1 sind zwei gegenüberliegende Ketten 3, 4 befestigt. Dazu sind der Größe der Kettenglieder entsprechende Ausnehmungen 5, 6 in der Platte vorgesehen, in der die äußeren Kettenglieder 7, 8 einliegen. Das daran anschließende Kettenglied 9, 10 liegt in einem Schlitz zwischen der Ausnehmung 5, 6 und dem Außenrand der Platte 1 ein.

Wird die Oberseite oder die Unterseite der Platte 1 durch eine weitere Platte der gleichen Größe abgedeckt, so sind die Ketten 3, 4 fest, aber auswechselbar mit der Platte 1 verbunden.

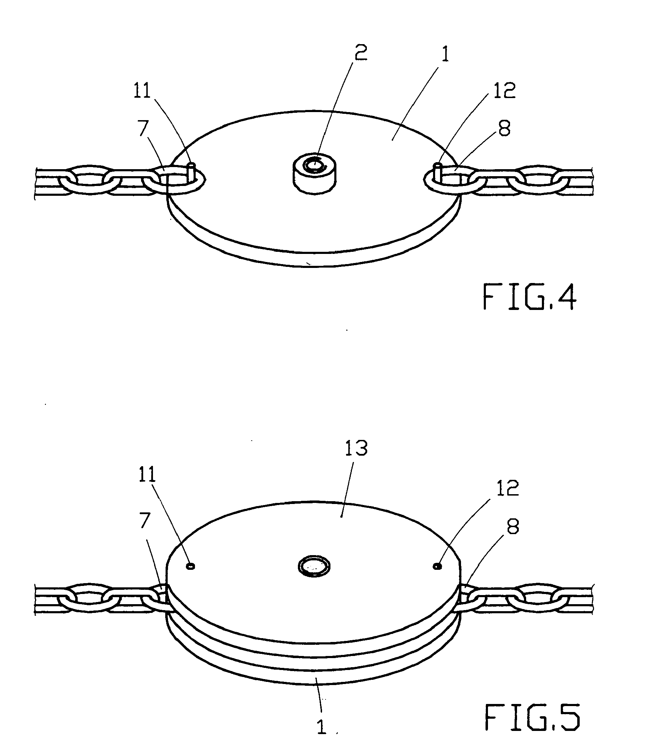

Eine erfindungsgemäße Alternative ist in den Figuren 4 und 5 dargestellt. In diesem zweiten Ausführungsbeispiel sind die äußeren Kettenglieder 7, 8 an in Längsrichtung sich nach oben erstreckende Bolzen 11, 12 eingehängt. Nachdem eine zweite Platte 13 mit entsprechenden Öffnungen für die Bolzen 11, 12 auf die erste Platte 1 aufgelegt ist und beide Platten durch Befestigung an der Motorsense bzw. an dem Freischneider fest miteinander verbunden sind, sind auch hier die Ketten 3 und 4 fest, aber lösbar mit der Platte 1 verbunden, so dass sie bei Verschleiß auf einfache, schnelle Weise ausgewechselt werden können.

Mit dem erfindungsgemäßen Schneidvorsatz lässt sich auch extremer Wildwuchs mit sogar kleinen Birkenstämmchen gleichzeitig von der Wurzel trennen und zerhäckseln. Das gleichzeitige Zerhäckseln, also Zerkleinern bis zur Mulchgröße wird mit den bekannten sternförmigen Messern nicht erreicht.

Neben den gezeigten Befestigungsarten der Ketten an der Platte sind noch eine Vielzahl anderer Befestigungen möglich, wobei der Schutzumfang der Erfindung nicht durch die speziellen Befestigungsmöglichkeiten eingeschränkt wird.

Bei der Befestigung der Ketten an der Platte ist auch eine Verschraubung der äußeren Kettenglieder mit der Platte oder ein Verschweißen dieser Teile möglich und liegt ebenfalls im Rahmen der Erfindung. Die Platte selber braucht im Übrigen nicht aus einem Hartmetall oder aus Stahl bestehen. Sie könnte auch aus einem Leichtmetall oder sogar aus Kunststoff bestehen, da die Platte keinem Verschleiß durch die unmittelbare Einwirkung des Pflanzenmaterials unterliegt.

Grundsätzlich ist es auch möglich, die erfindungsgemäßen Schneidwerkzeuge mit mindestens einem Gelenk an der Motorsense bzw. dem Freischneider zu befestigen, ohne dass dafür eine Platte eingesetzt wird. Die Erfindung ist jedenfalls nicht auf das Vorhandensein einer solchen Platte eingeschränkt. Möglich ist auch das Einhängen der äußeren Kettenglieder in Haken oder Ösen, die wiederum mit der Platte verschweißt oder an ihr angeschraubt sein können.

Von Vorteil ist es außerdem, wenn die Länge der Einzelkette doppelt so groß wie der Durchmesser der Platte ist. Dieses Verhältnis hat sich in der Praxis bewährt. Von Vorteil ist es außerdem, wenn jede Einzelkette 10 bis 20 Kettenglieder hat.

### Bezugszeichenliste

- 1: Platte
- 2: Gewindebohrung
- 3, 4: Kette
- 5, 6: Ausnehmung
- 7, 8: äußeres Kettenglied
- 9, 10: Kettenglied
- 11, 12: Bolzen
- 13: zweite Platte

## Patentansprüche

1. Schneidvorsatz für Motorsensen und Freischneider,
**dadurch gekennzeichnet,**
**dass** der Schneidvorsatz mindestens ein Schneidwerkzeug (3; 4) mit mindestens einem Gelenk aufweist.

2. Schneidvorsatz nach Anspruch 1,
**dadurch gekennzeichnet,**
**dass** das Schneidwerkzeug (3; 4) eine langgestreckte Form hat.

3. Schneidvorsatz nach Anspruch 2,
**dadurch gekennzeichnet,**
**dass** das Schneidwerkzeug als Kette (3; 4) ausgebildet ist.

4. Schneidvorsatz nach Anspruch 1, 2 oder 3,
**dadurch gekennzeichnet,**
**dass** das Schneidwerkzeug aus Metall, insbesondere aus Stahl, besteht.

5. Schneidvorsatz nach einem der Ansprüche 1 bis 4,
**dadurch gekennzeichnet,**
**dass** der Schneidvorsatz eine Platte (1) mit einem Befestigungsanschluss (2) an der Motorsense bzw. am Freischneider aufweist und dass mindestens zwei Schneidwerkzeuge (3; 4) an der Platte (1), insbesondere in deren Randbereich, befestigt sind.

6. Schneidvorsatz nach Anspruch 5,
**dadurch gekennzeichnet,**
**dass** die Schneidwerkzeuge (3; 4) auswechselbar an der Platte (1) befestigt sind.

7. Schneidvorsatz nach einem der Ansprüche 1 bis 6,
**dadurch gekennzeichnet,**
**dass** der Schneidvorsatz zwei gegenüberliegende Schneidwerkzeuge (3; 4) aufweist.
